(19) Europäisches Patentamt / European Patent Office / Office européen des brevets

(11) **EP 4 539 534 A1**

(12) **EUROPEAN PATENT APPLICATION**
published in accordance with Art. 153(4) EPC

(43) Date of publication:
**16.04.2025 Bulletin 2025/16**

(21) Application number: **22949874.6**

(22) Date of filing: **08.07.2022**

(51) International Patent Classification (IPC):
**H04W 28/02** (2009.01)

(52) Cooperative Patent Classification (CPC):
**H04W 28/02**

(86) International application number:
**PCT/CN2022/104584**

(87) International publication number:
**WO 2024/007291 (11.01.2024 Gazette 2024/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **TANG, Zihan**
**Shenzhen, Guangdong 518129 (CN)**
• **MA, Mengyao**
**Shenzhen, Guangdong 518129 (CN)**
• **LI, Jiahui**
**Shenzhen, Guangdong 518129 (CN)**
• **GU, Jiaqi**
**Shenzhen, Guangdong 518129 (CN)**
• **YAN, Min**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **RESOURCE SCHEDULING METHOD AND COMMUNICATION APPARATUS**

(57) This application provides a resource scheduling method and a communication apparatus, which are applicable to uplink data transmission. A terminal device sends a buffer status report to a network device, to report a data amount of to-be-sent uplink data. In addition, the terminal device further sends compression information of the to-be-sent uplink data to the network device, where the compression information indicates a compression parameter related to physical layer processing of the to-be-sent uplink data. Physical layer processing may include using, for a TB, a coding mode in which compression and channel coding are separated; or physical layer processing includes separately using, for a plurality of sub-TBs obtained based on a TB, a coding mode in which compression and channel coding are combined. The network device schedules an air interface resource for the to-be-sent uplink data of the terminal device based on the data amount and the compression information of the to-be-sent uplink data. This may resolve a problem of uplink resource mismatch caused by introducing, into a physical layer, the coding mode in which compression and channel coding are separated or the coding mode in which compression and channel coding are combined.

FIG. 6

## Description

## TECHNICAL FIELD

Embodiments of this application relate to the field of wireless communication technologies, and more specifically, to a resource scheduling method and a communication apparatus.

## BACKGROUND

In a cellular system, a layer 1, namely, a physical (physical, PHY) layer, is mainly responsible for channel coding, modulation, and resource mapping of data, and a layer 2, namely, a media access control (media access control, MAC) layer, is mainly responsible for data packet assembly and resource scheduling. In the current cellular system, for all operations at the physical layer and the MAC layer, it is assumed that to-be-communicated data from an upper layer has no redundancy, or redundancy in the to-be-communicated data is ignored, and only how to resist a channel transmission error is considered. Therefore, only channel coding (channel coding, CC) is used. However, in actual use, to-be-communicated data at the physical layer may have a specific redundancy degree. For example, a compression algorithm at an application layer fails to fully use redundancy in data for compression, or upper-layer data is not compressed, and an air interface may generate native data such as channel state information (channel state information, CSI), positioning, and sensing data, for example imaging and environment reconstruction, generated due to a newly added sensing function of the air interface. However, if a coding mode in which compression and channel coding are separated or a coding mode in which compression and channel coding are combined is used for the to-be-communicated data at the physical layer, better transmission performance can be obtained in comparison with using only channel coding.

However, an existing communication protocol of the cellular system does not support the foregoing coding mode at the physical layer. If the foregoing coding mode is introduced into the physical layer, a problem in uplink resource scheduling, for example, uplink resource mismatch, is caused.

## SUMMARY

This application provides a resource scheduling method, to support using, at a physical layer, a coding mode in which compression and channel coding are separated or a coding mode in which compression and channel coding are combined, without causing a problem of uplink resource scheduling.

According to a first aspect, a resource scheduling method is provided. The method may be applied to a transmit end of wireless communication, or may be applied to a chip or a chip system of the transmit end.

Herein, the transmit end may be a transmit end for data transmission. The following uses an example in which the transmit end is a terminal device for description. The method includes:

The terminal device sends a buffer status report to a network device, where the buffer status report indicates a data amount of to-be-sent uplink data of the terminal device;

the terminal device sends compression information of the to-be-sent uplink data to the network device, where the compression information indicates a compression parameter related to physical layer processing of the to-be-sent uplink data; and physical layer processing includes performing first coding on a transport block TB, and first coding is a coding mode in which compression and channel coding are separated; or physical layer processing includes separately performing second coding on a plurality of sub-TBs obtained based on a TB, and second coding is a coding mode in which compression and channel coding are combined; and

the terminal device receives resource scheduling information from the network device, where the resource scheduling information indicates an air interface resource allocated by the network device to the to-be-sent uplink data, and the air interface resource is determined based on the data amount of the to-be-sent uplink data and the compression parameter.

In the technical solution of this application, the terminal device sends the buffer status report to the network device, to report the data amount of the to-be-sent uplink data. In addition, the terminal device further sends the compression information of the to-be-sent uplink data to the network device, where the compression information indicates the compression parameter related to physical layer processing of the to-be-sent uplink data. Physical layer processing may include using, for the TB, the coding mode (an SSCC coding mode) in which compression or channel coding is separated, or physical layer processing includes separately using, for the plurality of sub-TBs obtained based on the TB, the coding mode (a JSCC coding mode) in which compression and channel coding are combined. The network device schedules the air interface resource for the to-be-sent uplink data of the terminal device based on the data amount and the compression information of the to-be-sent uplink data. This may resolve a problem of uplink resource mismatch caused by introducing, into a physical layer, the coding mode in which compression and channel coding are separated or the coding mode in which compression and channel coding are combined.

With reference to the first aspect, in some implementations of the first aspect, the method further includes:

The terminal device sends first uplink data on the air interface resource, where the first uplink data is obtained by performing first coding on a first transport block TB at a physical layer, or the first uplink data is obtained by separately performing, at the physical layer, second coding on a plurality of sub-TBs obtained based on the first TB, and the first TB is obtained by performing data packet assembly on the to-be-sent uplink data based on the compression parameter.

With reference to the first aspect, in some implementations of the first aspect, the resource scheduling information includes resource indication information and modulation and coding scheme MCS information, and the method further includes:

The terminal device determines a packet assembly length based on the resource indication information and the MCS information;
the terminal device performs data packet assembly on the to-be-sent uplink data based on the packet assembly length and the compression parameter, to obtain the first TB, where the estimated length that is obtained by compressing the to-be-sent uplink data and that is included in the first TB is less than or equal to the packet assembly length; and
the terminal device performs physical layer processing on the first TB to obtain the first uplink data.

In this implementation, an SSCC coding mode or a JSCC coding mode is introduced into the physical layer, and a feasible physical layer processing mechanism is provided.

According to a second aspect, a resource scheduling method is provided. The method may be applied to a receive end of wireless communication, or may be applied to a chip or a chip system of the receive end. The receive end may be a receive end for data transmission. The following uses an example in which the receive end is a network device for description. The method includes:

The network device receives a buffer status report from a terminal device, where the buffer status report indicates a data amount of to-be-sent uplink data of the terminal device;
the network device receives compression information of the to-be-sent uplink data from the terminal device, where the compression information indicates a compression parameter related to physical layer processing of the to-be-sent uplink data; and physical layer processing includes performing first coding on a transport block TB, and first coding is a coding mode in which compression and channel coding are separated; or physical layer processing includes separately performing second coding on a plurality of sub-TBs obtained based on a TB, and second coding is a coding mode in which compression and channel coding are combined; and
the network device sends resource scheduling information to the terminal device, where the resource scheduling information indicates an air interface resource allocated by the network device to the to-be-sent uplink data, and the air interface resource is determined based on the data amount of the to-be-sent uplink data and the compression parameter.

For beneficial technical effects of the second aspect, refer to the descriptions of the first aspect. Details are not described again.

With reference to the second aspect, in some implementations of the second aspect, the method further includes:
The network device receives first uplink data from the terminal device on the air interface resource, where the first uplink data is obtained by performing first coding on a first transport block TB at a physical layer of the terminal device, or the first uplink data is obtained by separately performing, at the physical layer of the terminal device, second coding on a plurality of sub-TBs obtained based on the first TB, and the first TB is obtained by performing data packet assembly on the to-be-sent uplink data based on the compression parameter.

In some implementations of the first aspect or the second aspect, the compression parameter is a compression ratio, and the compression ratio is a ratio of an estimated length obtained by compressing the to-be-sent uplink data to a length of the to-be-sent uplink data that is not compressed; or
the compression parameter is an estimated length obtained by compressing the to-be-sent uplink data.

In some implementations of the first aspect or the second aspect, the to-be-sent uplink data is physical layer native data, the buffer status report is a first-type buffer status report, and the first-type buffer status report indicates a data amount of the to-be-sent native data; and the first-type buffer status report includes a logical channel group identifier LCG ID field and a buffer status field, the LCG ID field has a plurality of different values, the plurality of different values respectively correspond to different native data types, and the buffer status field indicates a data amount of to-be-sent data of a native data type corresponding to the LCG ID field.

In this implementation, a corresponding type of buffer status report is designed for a physical layer native data type, and is for reporting the physical layer native data.

In some implementations of the first aspect or the second aspect, the first-type buffer status report includes a compression information field, and the compression information field carries compression information of the to-be-sent data of the native data type corresponding to the LCG ID field.

In this implementation, a buffer status report for a physical layer native data type may further include compression information of the physical layer native data. This provides an implementable mechanism for UE to report the compression information of the physical layer native data.

In some implementations of the first aspect or the second aspect, the to-be-sent uplink data is physical layer native data, the buffer status report is a second-type buffer status report, and the second-type buffer status report indicates a data amount of the to-be-sent native data;

the second-type buffer status report is obtained by extending a short buffer status report or a long buffer status report at a media access control MAC layer, and the second-type buffer status report includes a logical channel group identifier LCG ID field and a buffer status field; and

the LCG ID field includes x bits, there is one buffer status field, the x bits have y different values, p values in the y values respectively correspond to different native data types, q values in the y values respectively correspond to different logical channel types, and when the LCG ID field is a first value in the y values, the buffer status field indicates a data amount of to-be-sent data of a native data type or a logical channel type corresponding to the first value, where $p+q\leq y$, $y = 2^x$, and x, y, p, and q are all integers; or the LCG ID field includes z bits, k bits in the z bits and k native data types meet a bit mapping relationship, r bits in the z bits and r logical channel types meet a bit mapping relationship, and each bit in the z bits has a second value or a third value; when a $j^{th}$ bit in the z bits is the second value, a native data type or a logical channel type corresponding to the $j^{th}$ bit is selected; or when a $j^{th}$ bit in the z bits is the third value, a native data type or a logical channel type corresponding to the $j^{th}$ bit is not selected; and if w bits in the z bits are the second value, there are w buffer status fields, and the w buffer status fields respectively indicate data amounts of to-be-sent data of native data types and/or logical channel types corresponding to the w bits, where $z=k+r$, $1\leq j\leq z$, $1\leq w\leq z$, and z, k, r, j, and w are all positive integers.

In this implementation, the short BSR or the long BSR at the MAC layer is extended, so that an extended BSR can be reused for reporting the physical layer native data, and bit overheads caused by introduction of the buffer status report for the physical layer native data are reduced.

In some implementations of the first aspect or the second aspect, if there is one buffer status field, the second-type buffer status report further includes one compression information field, and when the x bits are the first value in the y values, the compression information field carries compression information of the to-be-sent data of the native data type or the logical channel type corresponding to the first value; or if there are w buffer status fields, the second-type buffer status report further includes w compression information fields, and the w compression information fields respectively carry compression information of the to-be-sent data of the native data types or the logical channel types corresponding to the w bits.

In this implementation, the extended BSR may further include the compression information. This provides an implementable mechanism for the UE to report the compression information of the physical layer native data.

According to a third aspect, a communication apparatus is provided. The communication apparatus has a function of implementing the method in any one of the first aspect or the possible implementations of the first aspect. The function may be implemented by hardware, or may be implemented by hardware executing corresponding software. The hardware or the software includes one or more units corresponding to the foregoing function.

According to a fourth aspect, a communication apparatus is provided. The communication apparatus has a function of implementing the method in any one of the second aspect or the possible implementations of the second aspect. The function may be implemented by hardware, or may be implemented by hardware executing corresponding software. The hardware or the software includes one or more units corresponding to the foregoing function.

According to a fifth aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method in any one of the first aspect or the possible implementations of the first aspect.

According to a sixth aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to enable the communication apparatus to perform the method in any one of the second aspect or the possible implementations of the second aspect.

According to a seventh aspect, a communication apparatus is provided, and includes a processor and a communication interface. The communication interface is configured to: receive data and/or information, and transmit the received data and/or information to the processor, the processor processes the data and/or information, and the communication interface is further configured to output data and/or information obtained through processing by the processor, to enable the communication apparatus to perform the method in any one of the first aspect or the possible implementations of the first aspect.

According to an eighth aspect, a communication apparatus is provided, and includes a processor and a communication interface. The processor processes to-be-sent data and/or information, and the communication interface is configured to output data and/or information obtained through processing by the processor, to enable the communication apparatus to perform the method in any one of the second aspect or the possible implementations of the second aspect.

Optionally, in the fifth aspect to the eighth aspect, there may be one or more processors, and there may be one or more memories. Optionally, there may be one or more transceivers.

According to a ninth aspect, a communication apparatus is provided, and includes at least one processor. The at least one processor is coupled to at least one memory. The at least one processor is configured to execute a computer program or instructions stored in the at least one memory, to enable the communication apparatus to perform the method in any one of the first aspect or the possible implementations of the first aspect.

According to a tenth aspect, a communication apparatus is provided, and includes at least one processor. The at least one processor is coupled to at least one memory. The at least one processor is configured to execute a computer program or instructions stored in the at least one memory, to enable the communication apparatus to perform the method in any one of the second aspect or the possible implementations of the second aspect.

According to an eleventh aspect, a computer-readable storage medium is provided. The computer-readable storage medium stores computer instructions, and when the computer instructions are run on a computer, the method in the first aspect, the second aspect, or any one of the possible implementations of the aspects is performed.

According to a twelfth aspect, a computer program product is provided. The computer program product includes computer program code, and when the computer program code is run on a computer, the method in any one of the first aspect, the second aspect, or the possible implementations of the aspects is performed.

According to a thirteenth aspect, a wireless communication system is provided, and includes the communication apparatus in the third aspect and the communication apparatus in the fourth aspect.

**BRIEF DESCRIPTION OF DRAWINGS**

FIG. 1 is a schematic flowchart of uplink resource application, uplink resource scheduling, and data transmission in a cellular system;
FIG. 2 is a diagram of a relationship between uplink resource scheduling and coding and modulation;
FIG. 3 is a diagram of a relationship between uplink resource scheduling and coding and modulation when SSCC is used at a physical layer of a cellular system;
FIG. 4 is a diagram of uplink resource allocation after SSCC or JSCC is introduced into a physical layer;
FIG. 5 is an architecture diagram of a communication system of a resource scheduling method according to this application;
FIG. 6 is a schematic flowchart of a resource scheduling method according to this application;
FIG. 7 is a diagram of collecting statistics on sparsity of each PB for to-be-sent uplink data in a buffer and estimating a compression ratio;
FIG. 8 is a diagram of quantizing a compression ratio by using 8 bits and adding a quantized compression ratio to a short BSR or a long BSR for reporting;
FIG. 9 is a diagram of a structure of a BSR for a native data type;
FIG. 10 is a diagram of performing data packet assembly by a terminal device based on a packet assembly length and a compression ratio;
FIG. 11 is a block diagram of a communication apparatus according to this application; and
FIG. 12 is a diagram of a structure of a communication apparatus according to this application.

**DESCRIPTION OF EMBODIMENTS**

The following describes technical solutions in embodiments of this application with reference to accompanying drawings.

The technical solutions in embodiments of this application may be applied to various communication systems, such as a 5th generation (5th generation, 5G) system or new radio (new radio, NR) system, a long term evolution (long term evolution, LTE) system, a long term evolution-advanced (long term evolution-advanced, LTE-A) system, an LTE frequency division duplex (frequency division duplex, FDD) system, and an LTE time division duplex (time division duplex, TDD) system. The technical solutions in embodiments of this application may be further applied to a future communication system, for example, a 6th generation mobile communication system. In addition, the technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system or another communication system, and the like. In addition, the technical solutions in embodiments of this application may be further extended to a similar wireless communication system, for example, a communication system related to wireless fidelity (wireless fidelity, Wi-Fi), worldwide interoperability for microwave access (worldwide interoperability for microwave access, WIMAX), a 3rd generation partnership project (3rd generation partnership project, 3GPP), and the like. This is not limited.

The communication system applicable to this application may include one or more transmit ends and one or more receive ends. Optionally, one of the transmit end and the receive end may be a terminal device, and the other may be a network device.

In some embodiments of this specification, a 5G system is used as an example to describe specific solution details. It may be understood that when the solution is applied to another communication system, for example, an LTE system or a future communication system, messages, channels, information, or the like in the solution may be replaced with messages, channels, information, or the like that can implement corresponding functions in the another communication system. This is not limited in this application. For example, a buffer status report may be a BSR in 5G, and a physical uplink shared channel may be a PUSCH in 5G.

For example, the terminal device may also be referred to as user equipment (user equipment, UE), an access terminal, a subscriber unit, a subscriber station, a mobile station, a mobile terminal (mobile terminal, MT), a remote station, a remote terminal, a mobile device, a user terminal, a terminal, a wireless communication device, a user agent, or a user apparatus. The terminal device in embodiments of this application may be a device that provides voice and/or data connectivity for a user, and may be configured to connect a person, an object, and a machine, for example, a handheld device or a vehicle-mounted device with a wireless connection function. The terminal device in embodiments of this application may be a mobile phone (mobile phone), a tablet computer (pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may serve as a base station. For example, the UE may serve as a scheduling entity that provides a sidelink signal between UEs in V2X, D2D, or the like.

In embodiments of this application, an apparatus configured to implement a function of the terminal may be a terminal, or may be an apparatus that can support the terminal in implementing the function, for example, a chip system or a chip. The apparatus may be installed in the terminal. In embodiments of this application, the chip system may include a chip, or may include a chip and another discrete component.

For example, the network device may be a device with a wireless transceiver function. The network device may be a device that provides a wireless communication function service, is usually located on a network side, and includes but is not limited to a next generation NodeB (gNodeB, gNB) in a 5th generation (5th generation, 5G) communication system, a base station in a 6th generation (6th generation, 6G) mobile communication system, a base station in a future mobile communication system, an access node in a wireless fidelity (wireless fidelity, Wi-Fi) system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB or a home NodeB, HNB), a baseband unit (baseband unit, BBU), a transmission reception point (transmission reception point, TRP), a transmission point (transmission point, TP), a base transceiver station (base transceiver station, BTS), or the like. In a network structure, the network device may include a central unit (central unit, CU) node, a distributed unit (distributed unit, DU) node, a RAN device including a CU node and a DU node, or a RAN device including a CU-control plane node, a CU-user plane node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. This is not limited.

In embodiments of this application, an apparatus configured to implement a function of the network device may be a network device, or may be an apparatus that can support the network device in implementing the function, for example, a chip system or a chip. The apparatus may be installed in the network device. In embodiments of this application, the chip system may include a chip, or may include a chip and another discrete component.

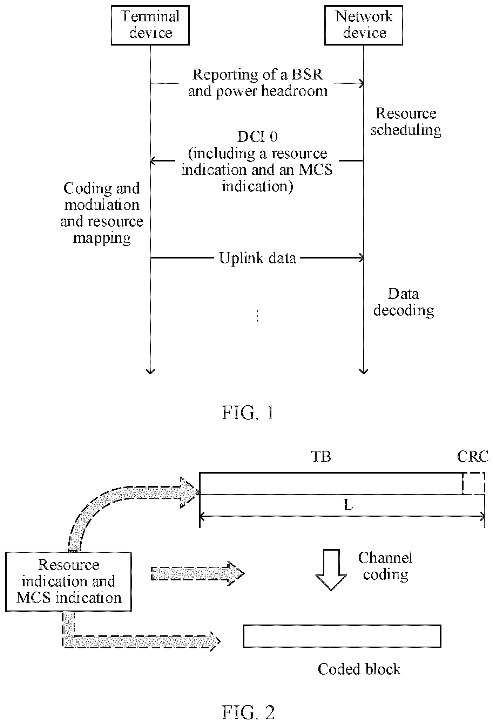

In an existing cellular system, for operations at a physical (physical, PHY) layer and a MAC layer, it is assumed that to-be-communicated data from an upper layer has no redundancy, or redundancy in the to-be-communicated data is ignored, and only how to resist a channel transmission error is considered. A basic procedure is shown in FIG. 1.

FIG. 1 is a schematic flowchart of uplink resource application, uplink resource scheduling, and data transmission in a cellular system. As shown in FIG. 1, a base station schedules an uplink resource for UE based on information such as a buffer status report and power headroom of the UE. The BSR is mainly for notifying the base station of a data amount of to-be-communicated data in each logical channel buffer of the UE, so that the base station can determine, based on the information, a quantity of air interface resources to be scheduled for the UE. Resource scheduling of the base station is to deliver downlink control information (downlink control information, DCI), for example, a DCI format 0 (briefly denoted as DCI 0), on a downlink control channel, to notify the UE. Fields related to resource scheduling in the DCI 0 are mainly a resource indication and an MCS indication. The resource indication indicates a time-frequency resource for sending uplink data, and the MCS indication indicates a bit rate of channel coding and a modulation order that are used on the time-frequency resource. FIG. 2 is a diagram of a relationship between uplink resource scheduling and coding and modulation. As shown in FIG. 2, a resource indication and an MCS indication jointly determine a size of a physical layer transport block (transport block, TB) (that is, a code block on which channel coding is not performed) of UE, a bit rate of channel coding, and a size of a code block on which channel coding is performed. The code block on which channel coding is performed is modulated, and is mapped to a corresponding air interface resource for sending.

It is known that a unit of data communicated at a physical layer is a transport block (transport block, TB). If the TB still has a specific redundancy degree, a coding mode in which compression and channel coding are separated or a coding mode in which compression and channel coding are combined is introduced into the physical layer, and the redundancy degree of the to-be-communicated data at the physical layer may be for further improving data transmission performance. However, a physical layer of a cellular system does not support the coding mode in which compression and channel coding are separated, and does not support the coding mode in which compression and channel coding are combined. In addition, a protocol layer (for example, a signaling procedure of resource scheduling) also does not support an implementation of this function at the physical layer.

It should be noted that source coding is usually understood as compression. Therefore, in the industry, the coding mode in which compression and channel coding are separated is usually referred to as separate source and channel coding (separate source and channel coding, SSCC), and the coding mode in which compression and channel coding are combined is referred to as joint source and channel coding (joint source and channel coding, JSCC). Therefore, SSCC coding in the following is the coding mode in which compression and channel coding are separated, and JSCC is the coding mode in which compression and channel coding are combined.

Introducing SSCC or JSCC into the physical layer can improve the data transmission performance. However, because the existing cellular system protocol layer supports use of SSCC or JSCC at the physical layer, a problem of uplink resource scheduling mismatch is also caused.

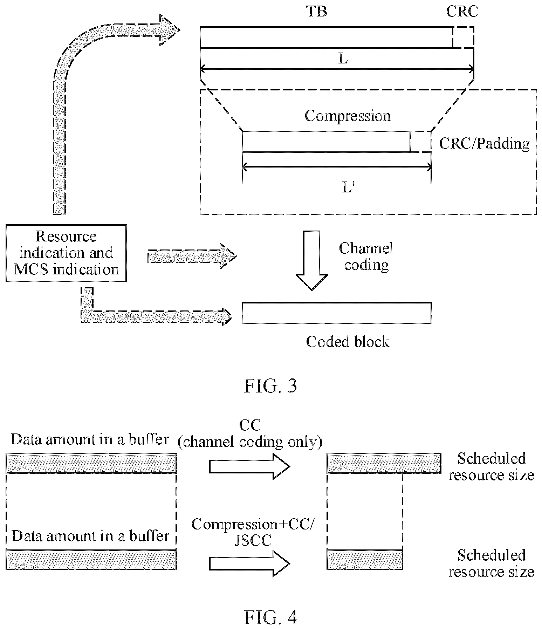

FIG. 3 is a diagram of a relationship between uplink resource scheduling and coding and modulation when SSCC is used at a physical layer of a cellular system. As described above, the resource indication and the MCS indication in the downlink control information of the base station jointly determine the size (for example, a length L in FIG. 3) of the TB, coding and modulation, and resource mapping (a resource size). It can be learned that the resource indication and the MCS indication are indispensable for successful decoding at a receive end. After SSCC is introduced into the physical layer, data needs to be first compressed (in a lossy or lossless manner), and a TB whose length is L and that is scheduled by the base station is compressed into a new TB whose length is $L'$. Optionally, a CRC (for example, $CRC'$) may be added or padding (padding) may be performed after the new TB. Without loss of generality, padding is usually performed by using 0, and then channel coding is performed.

When scheduling an uplink resource, the base station needs to determine, with reference to information such as a BSR reported by UE, a quantity of air interface resources to be allocated to the UE, and channel error protection is mainly considered. If data compression is introduced into the physical layer, and if the BSR sent by the UE is for reporting only a data amount of to-be-sent data that is not compressed, the base station does not know a data amount obtained by compressing the to-be-sent data, and the uplink resource scheduled by the base station is wasted. FIG. 4 is a diagram of uplink resource allocation after SSCC or JSCC is introduced into the physical layer. However, if the BSR sent by the UE is for reporting a size $L'$ of a data amount obtained by compressing to-be-sent uplink data, the UE needs to compress the to-be-sent uplink data in advance, and a packet assembly delay is caused. In addition, an implementation is difficult because before receiving scheduling information (which may specifically be the resource indication and the MCS indication) from a network side, the UE does not know the size of the data to be compressed, in other words, the UE does not know a value of L.

Similarly, if JSCC is introduced into the physical layer, a similar uplink resource allocation problem is also caused. JSCC is to perform both compression and channel coding on the to-be-sent data by using a redundancy degree of the to-be-sent data, and it may be essentially considered as that a higher bit rate of channel coding is used based on the redundancy degree of the to-be-sent data and a puncturing pattern different from channel coding. Equivalently, it may also be considered as that air interface resource consumption is reduced by using a redundancy degree of a source under the premise of a same error protection effect. As a whole, it may also be considered as that data compression is first performed once before channel coding. Therefore, when JSCC is used at the physical layer, a problem caused to uplink resource allocation is the same as a problem caused to uplink resource allocation when SSCC is introduced into the physical layer.

Therefore, this application provides a resource scheduling method, to resolve a problem of uplink resource mismatch (for example, a size of an air interface resource allocated by a network side to uplink data is greater than that of an air interface resource needed by uplink data actually sent by UE) caused by introducing SSCC or JSCC into a physical layer.

In other words, in this application, not only channel error protection is considered at the physical layer, but also a redundancy degree of to-be-sent data at the physical layer is used. A coding mode in which compression and channel coding are separated or a coding mode in which compression and channel coding are combined is used for the data at the physical layer.

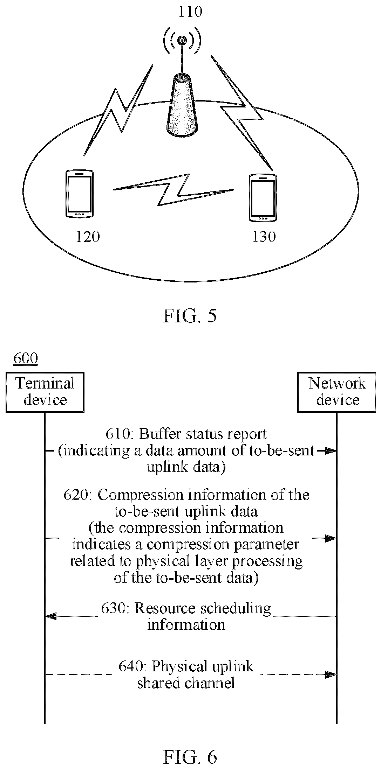

FIG. 5 is an architecture diagram of a communication system applicable to a resource scheduling method according to this application. As shown in FIG. 5, the resource scheduling method provided in this application is mainly applicable to a scenario of uplink data transmission between a network device and a terminal device, and is also applicable to data transmission between terminal devices, that is, sidelink (sidelink, SL) data transmission. This is not limited in this application. Therefore, a transmit end in this specification may be the terminal in uplink data transmission, or may be a sending terminal in sidelink data transmission. Similarly, a receive end may be the network device in uplink data transmission or a receiving terminal in sidelink data transmission. The following uses uplink data transmission as an example to describe the technical solutions of this application.

In the technical solutions of this application, the terminal device reports a buffer status report to the network device, where the buffer status report indicates a data amount of to-be-sent uplink data. In addition, the terminal device sends compression information of the to-be-sent uplink data to the network device, where the compression information indicates a compression parameter related to physical layer processing of the to-be-sent uplink data. The network device schedules an air interface resource for the to-be-sent uplink data of the terminal device based on the data amount of the to-be-sent uplink data and the compression parameter, so that a problem that the air interface resource scheduled by the network device is mismatched after SSCC or JSCC is introduced into a physical layer of the terminal device can be avoided.

In this embodiment of this application, the terminal device may be a terminal device 120 or 130 shown in FIG. 5, and the network device may be a network device 110 shown in FIG. 5. FIG. 5 is merely used as an example. The communication system may further include other communication devices, for example, more terminal devices or more network devices. This is not limited.

FIG. 6 is a schematic flowchart of a resource scheduling method according to this application.

610: A terminal device sends a buffer status report to a network device, where the buffer status report indicates a data amount of to-be-sent uplink data of the terminal device.

Optionally, the to-be-sent uplink data herein may be data from an application layer, or may be physical layer native data. This is not limited. The following describes in detail that the terminal device reports a buffer status report of the physical layer native data to a network side.

620: The terminal device sends compression information of the to-be-sent uplink data to the network device, where the compression information indicates a compression parameter related to physical layer processing of the to-be-sent uplink data.

Optionally, physical layer processing may include:

performing first coding on a TB, where first coding is a coding mode in which compression and channel coding are separated; or
separately performing second coding on a plurality of sub-TBs obtained based on a TB, where second coding is a coding mode in which compression and channel coding are combined.

The network device receives the buffer status report and the compression information from the terminal device.

630: The network device sends resource scheduling information to the terminal device, where the resource scheduling information indicates an air interface resource allocated by the network device to the to-be-sent uplink data of the terminal device, and the air interface resource is determined based on the to-be-sent uplink data of the terminal device and the compression parameter.

The terminal device receives the resource scheduling information from the network device.

In the technical solutions of this application, the coding mode in which compression and channel coding are separated or the coding mode in which compression and channel coding are combined is introduced into a physical layer of the terminal device. The terminal device reports the buffer status report of the to-be-sent uplink data to the network device, and also reports the compression information of the to-be-sent uplink data. The compression information is a compression ratio (namely, an estimated compression ratio) determined through estimation by the terminal device based on the to-be-sent uplink data before the terminal device sends the buffer status report, or may be an estimated size obtained by compressing the to-be-sent uplink data (in other words, an estimated length obtained by compressing the to-be-sent uplink data). The following describes some implementations of estimating the compression ratio by the terminal device. The terminal device sends the compression information of the to-be-sent uplink data to the network device, so that the network device can be assisted in scheduling an uplink resource, to avoid a problem that the network device schedules the air interface resource for the to-be-sent uplink data of the terminal device when the network device does not know the compression information related to physical layer processing of the terminal device, resulting in mismatch between the scheduled air interface resource and a data amount of actually sent uplink data.

Further, the method 600 may include step 640.

640: The terminal device sends first uplink data on the air interface resource. The network device receives the first uplink data from the terminal device.

The first uplink data is obtained by performing first coding on a first TB at the physical layer of the terminal device, or the first TB is obtained by separately performing second coding on a plurality of sub-TBs obtained based on the first TB. The first TB is obtained by performing data packet assembly on the to-be-sent uplink data based on the compression parameter at the physical layer of the terminal device.

Optionally, the terminal device may estimate the compression ratio of the to-be-sent uplink data by using a plurality of different implementations. The following provides only some examples.

In an example, when statistics about a data amount in a buffer of each logical channel (group) is collected through radio link control (radio link control, RLC) and a packet data convergence protocol (packet data convergence protocol, PDCP) of the terminal device, the following process of estimating the compression ratio needs to be added:

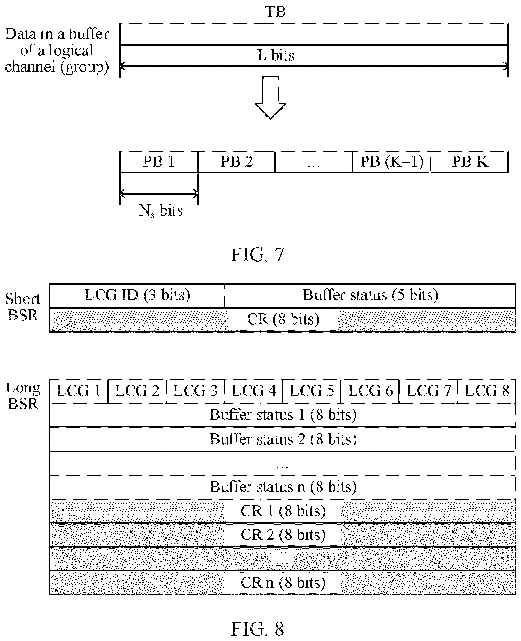

collecting statistics on packet sparsity of data in the buffer of each logical channel (group), and then estimating the compression ratio of the to-be-sent uplink data based on the sparsity. Specifically, the to-be-sent uplink data in the buffer is divided into several preprocessing blocks (preprocessing blocks, PBs) with sizes of $N_s$, and then sparsity statistics are collected on the PBs. FIG. 7 is a diagram of collecting statistics on sparsity of each PB for the to-be-sent uplink data in the buffer and estimating the compression ratio. After the sparsity of each PB is obtained through statistics collection, a length obtained by compressing the to-be-sent uplink data in the buffer of the logical channel (group) (also referred to as an estimated length obtained by compressing the to-be-sent uplink data in the text) is estimated based on the sparsity.

For example, when the length obtained by compressing the to-be-sent uplink data is estimated, the following calculation manners may be used.

In a calculation manner, it is assumed that a length of the to-be-sent uplink data that is in the buffer and that is not compressed is L bits, a TB is divided into K PBs based on the length $N_s$, sparsity of an $i^{th}$ PB is denoted as $S_i$ (where $0 \leq S_i \leq 1$), and a corresponding entropy is $H_i$, where $H_i = -S_i \log(S_i) - (1 - S_i) \log(1 - S_i)$. In this case, the length obtained by compressing the to-be-sent uplink data in the buffer is estimated as $S = \sum_{i=1}^{K} N_s H_i$.

In another calculation manner, a series of sparsity ranges are set, statistics are collected on a right endpoint value of a range to which the sparsity of each PB belongs, the right endpoint value is denoted as $S_i'$, and a corresponding entropy is denoted as $H_i'$. In this case, the length obtained by compressing the to-be-sent uplink data in the buffer is estimated as $S' = \sum_{i=1}^{K} N_s H_i'$.

After the length obtained by compressing the to-be-sent uplink data is estimated, the compression ratio may be obtained through calculation with reference to a length of the to-be-sent uplink data that is not compressed. It should be understood that the compression ratio may be a ratio of the estimated length obtained by compressing the to-be-sent uplink data in the buffer of the logical channel to the length of the to-be-sent uplink data that is not compressed, and is denoted as CR. In the first calculation manner, CR=S/L; or in the second calculation manner, CR=S'/L. In addition, the compression ratio may also be estimated with reference to historical information.

The foregoing manners of estimating the compression ratio are merely examples. In still another feasible calculation manner, several segments are randomly selected from the to-be-sent uplink data in the buffer, where a length of selected data is usually far less than a total data amount (namely, a data length L), then the selected data is compressed by using a data compression algorithm, and statistics are collected on a length of the selected data that is not compressed and a length obtained by compressing the selected data, to obtain an estimated compression ratio. For example, the compression algorithm used in the calculation manner may be an online arithmetic code, a Lempel-Ziv (Lempel-Ziv) algorithm, or the like. This is not limited. It should be noted that the compression algorithm should be consistent with a compression algorithm used when data compression is performed at the physical layer of the terminal device.

The following further provides some examples in which the terminal device sends the compression information to the network device.

An example in which the terminal device sends the compression ratio to the network device is used. Optionally, the terminal device may quantize the compression ratio, and report quantized information.

For example, the terminal device quantizes a compression ratio of each logical channel (group) into several levels, and uses fixed x bits to represent quantized compression ratio information. The quantized compression ratio information may be reported to the network side together with the BSR. For example, the quantized compression ratio information and the BSR may be reported by using a media access control control element (media access control control element, MAC CE). For example, the compression ratio may be quantized to one of 256 levels, and then the quantization level is indicated by using 8 bits. In an example, the quantization level may be added to a short BSR (short BSR) or a long BSR (long BSR) for reporting. In other words, the compression information in this application may be reported by extending the short BSR or the long BSR, as described in the following FIG. 8.

FIG. 8 is a diagram of quantizing the compression ratio by using 8 bits and adding a quantized compression ratio to the short BSR or the long BSR for reporting. The short BSR is usually applicable to reporting a buffer status of only one logical channel group or one type of native data. The short BSR includes an LCG ID and a buffer status field. The LCG ID uses 3 bits to identify a number of one logical channel group, and the following 5 bits are the buffer status field, and indicate a data amount in a buffer corresponding to the logical channel group. The long BSR is applicable to reporting buffer statuses of a plurality of logical channel groups or a plurality of types of native data. LCGs 1 to 8 form 8-bit bit mapping (bitmap), and the 8 bits respectively correspond to eight different logical channel group types. If a value of a bit in the 8 bits is 0, it indicates that a logical channel group corresponding to the bit is not selected; or if a value of a bit in the 8 bits is 1, it indicates that a logical channel group corresponding to the bit is selected. Data amounts in buffers corresponding to selected logical channel groups are attached to the subsequent buffer status (buffer status) field in a same order as the bitmap, and a data amount in a buffer of each selected logical channel is indicated by using the 8 bits.

Optionally, the to-be-sent uplink data of the terminal device in this application may be the physical layer native data.

Optionally, for reporting of the physical layer native data, BSRs for different native data types may be added.

For example, the physical layer native data may include positioning data, reconstructed environment data, sensing imaging data, and the like, or may be another type of physical layer native data. This is not limited.

The following describes several implementations in which the terminal device reports the physical layer native data to the network device and that are provided in this application, and the implementations are merely used as examples for description.

Implementation (1)

For example, in an implementation, a type of BSR may be redefined. To be distinguished from the foregoing short BSR and long BSR at a MAC layer, the BSR is referred to as a first-type BSR in this specification. The first-type BSR may include a logical channel group identifier LCG ID field and a buffer status field. The LCG ID field has (or corresponds to) a plurality of different values, and the plurality of different values correspond to different native data types. The buffer status field indicates a data amount in a buffer. It should be understood that, when a value of the LCG ID field corresponds to a native data type, the buffer status field indicates an amount of to-be-sent native data of the native data type.

Implementation (2)

For example, in another implementation, a first-type BSR may include an LCG ID field, a buffer status field, and a compression information field. In comparison with the foregoing implementation, in this implementation, the first-type BSR further includes the compression information field, indicating compression information (for example, a compression ratio) of to-be-sent native data. Specifically, the compression information field indicates a data amount of to-be-sent data of a native data type corresponding to the LCG ID field.

In the two implementations, different values of the LCG ID field in the first-type BSR respectively correspond to different native data types. For example, the LCG ID field of the first-type BSR includes 4 bits. When a value of the 4 bits is 0000, it indicates that the first-type BSR corresponds to a positioning data type. Correspondingly, the buffer status field indicates a data amount of to-be-sent physical layer native positioning data. If the compression information field is further included, the compression information field indicates compression information of the to-be-sent physical layer native positioning data. When a value of the 4 bits is 00001, it indicates that the first-type BSR corresponds to a sensing imaging data type. Correspondingly, the buffer status field indicates a data amount of to-be-sent physical layer native sensing imaging data. If the compression information field is further included, the compression information field indicates compression information of the to-be-sent physical layer native sensing imaging data.

Implementation (3)

For example, in an implementation, the short BSR or the long BSR may be reused for a BSR for reporting the physical layer native data, but the short BSR or the reused long BSR needs to be extended. For ease of description, an extended BSR is referred to as a second-type BSR.

Specifically, an LCG ID field of the short BSR or the long BSR may be extended to support more LCG IDs, and extra LCG IDs are for corresponding to different native data types.

For example, the LCG ID field and a buffer status field of the short BSR or the long BSR are extended. In this implementation, the extended BSR (namely, the second-type BSR) includes an LCG ID field and a buffer status field.

In an example, the short BSR is extended to obtain the extended BSR. The extended BSR includes one LCG ID field and one buffer status field. The LCG ID field includes x bits, the x bits have (or correspond to) y values, p values in the y values respectively correspond to different native data types, and q values in the y values respectively correspond to different logical channel types. When the LCG ID field is a first value in the y values, the buffer status field indicates a data amount of to-be-sent data of a native data type or a logical channel type corresponding to the first value, where $p+q \leq y$, and x, y, p, and q are all integers. When $p+q<y$, it indicates that the y values include a reserved value. For example, $y = 2^x$.

In another example, the long BSR is extended to obtain the extended BSR. The extended BSR includes an LCG ID field and a buffer status field. The LCG ID field includes z bits, k bits in the z bits and k native data types meet a bit mapping relationship, and r bits in the z bits and r logical channel types meet a bit mapping relationship. Each bit in the z bits has a second value or a third value; and when a bit in the z bits is the second value, it indicates that a native data type or a logical channel type corresponding to the bit is selected; or when a bit is the third value, it indicates that a native data type or a logical channel type corresponding to the bit is not selected. If w bits in the z bits are the second value, there are w buffer status fields in the extended BSR, and the w buffer status fields respectively indicate data amounts of to-be-sent data of native data types and/or logical channel types corresponding to the w bits, where $z=k+r$, $1 \leq w \leq z$, and z, k, w, and r are all positive integers. For example, the second value is 1, and the third value is 0, and are not limited to other values.

Implementation (4)

Optionally, a second-type BSR further includes a compression information field.

If the short BSR is extended to obtain an extended BSR, the extended BSR includes one compression information field. It can be learned with reference to the foregoing implementation (3) that, in this design, the extended BSR includes one LCG ID field, one buffer status field, and one compression information field. When x bits of the LCG ID field are a first value in y values, the compression information field carries compression information of to-be-sent data of a native data type or a logical channel type corresponding to the first value.

If the long BSR is extended to obtain an extended BSR, a quantity of compression information fields in the extended BSR dynamically changes. It can be learned with reference to the foregoing implementation (3) that, in this design, the extended BSR includes an LCG ID field, and the LCG ID field includes z bits. When w bits in the z bits are a second value, it indicates that native data types and/or logical channel types corresponding to the w bits are selected. In this case, the extended BSR includes w buffer status fields and w compression information fields. The w buffer status fields respectively indicate data amounts of to-be-sent data of the native data types and/or the logical channel types corresponding to the w bits, and the w compression information fields respectively carry compression information of to-be-sent data of the native data types or the logical channel types corresponding to the w bits.

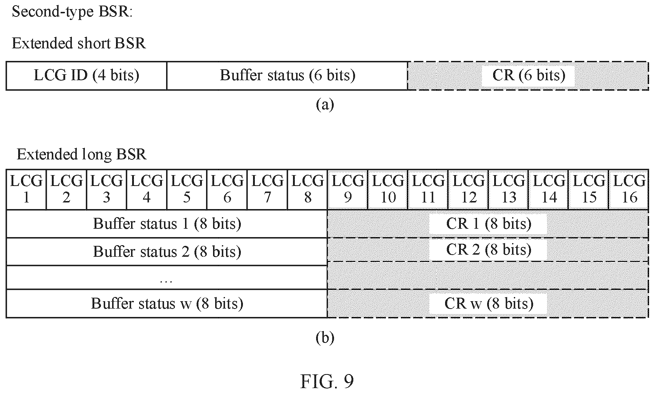

The following uses an example to describe the foregoing implementation (4) with reference to FIG. 9. FIG. 9 is a diagram of a structure of a BSR for a native data type.

For example, as shown in (a) in FIG. 9, an example in which the short BSR is extended is used. 1 bit is added to the LCG ID field, and the LCG ID field is extended from original 3 bits to 4 bits. Therefore, the LCG ID field is expanded from originally being capable of indicating eight LCG IDs to being capable of indicating 16 LCG IDs, so that eight additional LCG IDs can be indicated, where the eight additional LCG IDs may respectively correspond to eight native data types. In addition, 1 bit is added to the buffer status (buffer status) field, and the buffer status field is extended from original 5 bits to 6 bits. Optionally, the extended BSR further includes the compression information field. An example in which the compression information is a compression ratio CR is used. The compression information field may be a CR field. For example, the CR field includes 6 bits. It can be seen that, in this example, a total length of the short BSR is extended to 16 bits. The extended BSR is an example of the foregoing second-type BSR.

The long BSR is further used as an example. As shown in (b) in FIG. 9, 8 bits may be directly added to the original LCG ID field, to extend original 8 bits to 16 bits. It should be understood that the extended LCG ID field of the BSR includes the 16 bits in total, where the 8 bits respectively correspond to different logical channel types, the eight newly added bits and eight native data types meet a bit mapping (bitmap) relationship, and each bit corresponds to one native data type. Optionally, when a bit in the 16 bits of the LCG ID field is 1, it indicates that a native data type or a logical channel type corresponding to the bit is selected. In this case, the extended BSR further includes a data amount of to-be-sent data of the selected native data type or logical channel type. Optionally, the extended BSR further includes compression information of the to-be-sent data of the selected native data type or logical channel type. Therefore, in this design, if w bits in the z bits included in the LCG ID field are 1, the extended BSR includes w buffer status fields that are respectively for reporting data amounts of to-be-sent data of native data types and/or logical channel types corresponding to the w bits. Optionally, the extended BSR further includes w compression information fields that respectively carry compression information of the to-be-sent data of the native data types and/or the logical channel types corresponding to the w bits. For example, in (b) in FIG. 9, the buffer status field includes 8 bits and/or the CR field includes 8 bits. This is not limited.

The foregoing describes in detail specific implementations in which the terminal device estimates the compression ratio of the to-be-sent uplink data and the terminal device reports the BSR of the native data to the network device.

In step 640, the terminal device sends the first uplink data to the network device. Specifically, the terminal device sends the first uplink data to the network device on a physical uplink shared channel. NR is used as an example. The physical uplink shared channel may be a PUSCH.

Optionally, if uplink control information (uplink control information, UCI) still needs to be sent, the terminal device multiplexes the first uplink data and the UCI on the PUSCH for sending.

As described above, the first uplink data is obtained by performing first coding on the first TB at the physical layer of the terminal device, or is obtained by separately performing second coding on the plurality of sub-TBs obtained based on the first TB, and the first TB is obtained by performing data packet assembly on the to-be-sent uplink data based on the compression parameter at the physical layer of the terminal device.

Specifically, after the terminal device receives the resource scheduling information from the network device, where the resource scheduling information includes a resource indication and an MCS indication, the terminal device calculates a packet assembly length (TB size) based on the resource indication and the MCS indication. For example, for a method for calculating the packet assembly length, refer to a specific implementation of determining the TBS (TB size) in the NR. After determining the packet assembly length, the terminal device performs data packet assembly on the to-be-sent uplink data based on the packet assembly length and the compression parameter, to obtain the first TB. During packet assembly, the terminal device estimates, based on the compression parameter, the length obtained by compressing the to-be-sent uplink data, until the packet assembly length is filled with the estimated length obtained by compressing the to-be-sent uplink data. In this case, the first TB is obtained. In some cases, the packet assembly length cannot be filled with the to-be-sent uplink data. Therefore, the estimated length that is obtained by compressing the to-be-sent uplink data and that is included in the first TB is less than or equal to the packet assembly length. After the first TB is obtained, first coding may be subsequently performed on the first TB, or the plurality of sub-TBs are obtained based on the first TB, and then second coding is separately performed on the plurality of sub-TBs. This is not limited. Optionally, in the foregoing embodiment, during packet assembly, the terminal device specifically performs packet assembly on an RLC PDU in a buffer of each logical channel group.

Optionally, if there is still to-be-sent native data, the terminal device performs packet assembly on the RLC PDU in the buffer of each logical channel group and the native data, to obtain the first TB.

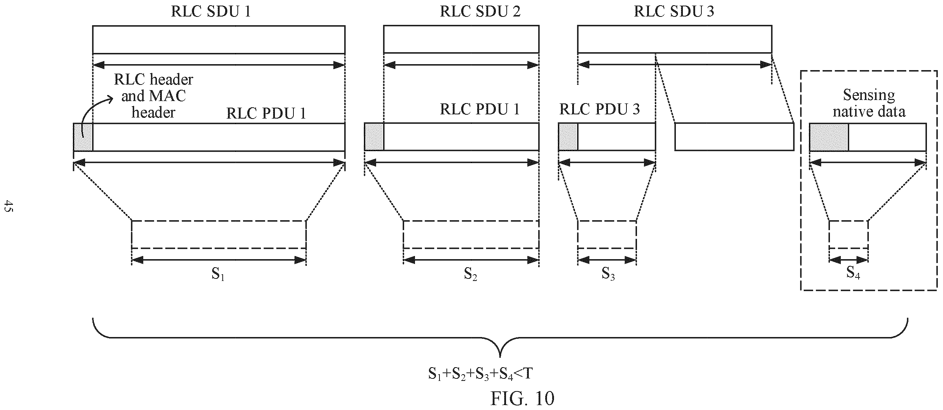

FIG. 10 is a diagram of performing data packet assembly by the terminal device based on the packet assembly length and the compression ratio. It should be understood that an RLC layer segments/reassembles the RLC SDU corresponding to each logical channel group, to match a MAC SDU size allocated by the MAC layer to the RLC SDU. After the RLC SDU is segmented/reassembled, an RLC header is added to the RLC SDU, and the RLC SDU is encapsulated into an RLC PDU and delivered to the MAC layer. The MAC layer performs a scheduling function, and is responsible for allocating, to several logical channel groups, physical resources corresponding to current transmission. Lengths of RLC PDUs of the logical channel groups may be different. The RLC PDU is referred to as a MAC SDU at the MAC layer. Several MAC SDUs are multiplexed into one MAC PDU, and are sent through a physical layer channel. One MAC PDU may carry data of a plurality of different logical channel groups. For the physical layer, the MAC PDU is referred to as a TB. One TB is for carrying one MAC PDU, and a size of the TB is determined by a quantity of physical resources allocated to the TB and an MCS. As shown in FIG. 10, the packet assembly length is denoted as T. When performing data packet assembly, the terminal device estimates, based on the compression ratio, the length obtained by compressing the to-be-sent uplink data, until T is filled with the estimated length obtained by compressing the to-be-sent uplink data. For example, in FIG. 10, $S_1+S_2+S_3+S_4 \leq T$. In this case, the first TB is obtained.

After the first TB is obtained, a subsequent operation may be compressing the first TB at the physical layer, and then performing channel coding, rate matching, modulation, and resource mapping on a compressed TB.

Alternatively, a subsequent operation may be performing JSCC processing on the first TB at the physical layer. First, the first TB is preprocessed. A preprocessing process is roughly as follows: $2^Q$ sparsity ranges are preset, and then the first TB is divided into B PBs based on a fixed length. For example, a length of each PB is $N_s$. Then, the plurality of PBs are combined based on sparsity. For example, PBs whose sparsity is within a same sparsity range form one sub-TB, and $2^Q$ sub-TBs are obtained through combination. In addition, a control information sub-TB is created, and the control information sub-TB indicates information about sparsity of each of the B PBs. For example, if each of the preset $2^Q$ sparsity ranges corresponds to one index, for example, the control information sub-TB may indicate an index of a sparsity range corresponding to the sparsity of each of the B PBs. Further, each PB needs Q bits to indicate the sparsity range of the PB, and there are B PBs in total. Therefore, a length of the control information sub-TB is B·Q bits, where both B and Q are positive integers. It can be learned that a total of $2^Q$ sub-TBs and one control information sub-TB are obtained based on the first TB, that is, the plurality of sub-TBs obtained based on the first TB in this specification. Then, JSCC is performed on the plurality of sub-TBs. It should be understood that second coding is independently performed on each of the plurality of sub-TBs. In other words, each sub-TB is independently processed by using a coding mode in which compression and channel coding are combined. Particularly, in a process of performing JSCC on the plurality of sub-TBs, a compression rate of the control information sub-TB is 1. Resource multiplexing of different sub-TBs may be determined on a network side and a terminal side according to a fixed rule.

When the terminal device multiplexes the uplink data and the UCI on the PUSCH for sending, the UCI may include one or more of the following types: a hybrid automatic repeat request acknowledgment (hybrid automatic repeat request acknowledgement, HARQ-ACK) and channel state information (channel state information, CSI). Optionally, the CSI may include a CSI part 1 and a CSI part 2.

The foregoing describes in detail the resource scheduling method provided in this application, and the following describes a communication apparatus provided in this application.

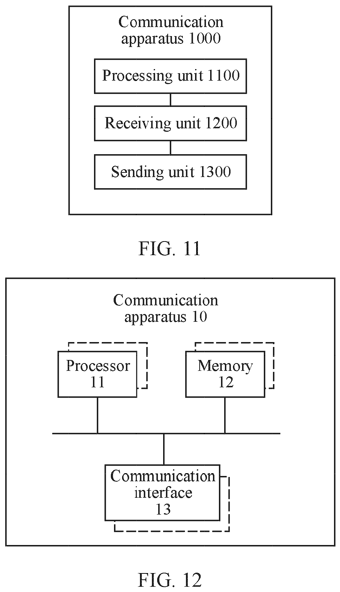

FIG. 11 is a block diagram of a communication apparatus according to this application. As shown in FIG. 11, the communication apparatus 1000 includes a processing unit 1100, a receiving unit 1200, and a sending unit 1300.

Optionally, the communication apparatus 1000 may correspond to the terminal device in embodiments of this application.

In this case, units of the communication apparatus 1000 are configured to implement the following functions.

The sending unit 1300 is configured to:

send a buffer status report to a network device, where the buffer status report indicates a data amount of to-be-sent uplink data of the communication apparatus; and
send compression information of the to-be-sent uplink data to the network device, where the compression information indicates a compression parameter related to physical layer processing of the to-be-sent uplink data; and physical layer processing includes performing first coding on a transport block TB, and first coding is a coding mode in which compression and channel coding are separated; or physical layer processing includes separately performing second coding on a plurality of sub-TBs obtained based on a TB, and second coding is a coding mode in which compression and channel coding are combined.

The receiving unit 1200 is configured to receive resource scheduling information from the network device, where the resource scheduling information indicates an air interface resource allocated by the network device to the to-be-sent uplink data, and the air interface resource is determined based on the data amount of the to-be-sent uplink data and the compression parameter.

Optionally, in an embodiment, the sending unit 1300 is further configured to:
send first uplink data on the air interface resource, where the first uplink data is obtained by performing first coding on a first transport block TB at a physical layer of the communication apparatus, or the first uplink data is obtained by separately performing, at the physical layer of the communication apparatus, second coding on a plurality of sub-TBs obtained based on the first TB, and the first TB is obtained by performing data packet assembly on the to-be-sent uplink data based on the compression parameter.

Optionally, in an embodiment, the compression parameter is a compression ratio, and the compression ratio is a ratio of an estimated length obtained by compressing the to-be-sent uplink data to a length of the to-be-sent uplink data that is not compressed; or
the compression parameter is an estimated length obtained by compressing the to-be-sent uplink data.

Optionally, in an embodiment, the resource scheduling information includes resource indication information and modulation and coding scheme MCS information, and the processing unit 1100 is configured to:

determine a packet assembly length based on the resource indication information and the MCS information;
perform data packet assembly on the to-be-sent uplink data based on the packet assembly length and the compression parameter, to obtain the first TB, where the estimated length that is obtained by compressing the to-be-sent uplink data and that is included in the first TB is less than or equal to the packet assembly length; and
perform physical layer processing on the first TB to obtain the first uplink data.

Optionally, in an embodiment, the to-be-sent uplink data is physical layer native data, the buffer status report is a first-type buffer status report, and the first-type buffer status report indicates a data amount of the to-be-sent native data; and
the first-type buffer status report includes a logical channel group identifier LCG ID field and a buffer status field, the LCG ID field has a plurality of different values, the plurality of different values respectively correspond to different native data types, and the buffer status field indicates a data amount of to-be-sent data of a native data type corresponding to the LCG ID field.

Optionally, in an embodiment, the first-type buffer status report includes a compression information field, and the compression information field carries compression information of the to-be-sent data of the native data type corresponding to the LCG ID field.

Optionally, in an embodiment, the to-be-sent uplink data is physical layer native data, the buffer status report is a second-type buffer status report, and the second-type buffer status report indicates a data amount of the to-be-sent native data;

the second-type buffer status report is obtained by extending a short buffer status report or a long buffer status report at a media access control MAC layer, and the second-type buffer status report includes a logical channel group identifier LCG ID field and a buffer status field; and

the LCG ID field includes x bits, there is one buffer status field, the x bits have y different values, p values in the y values respectively correspond to different native data types, q values in the y values respectively correspond to different logical channel types, and when the LCG ID field is a first value in the y values, the buffer status field indicates a data amount of to-be-sent data of a native data type or a logical channel type corresponding to the first value, where $p+q\leq y$, $y = 2^x$, and x, y, p, and q are all integers; or the LCG ID field includes z bits, k bits in the z bits and k native data types meet a bit mapping relationship, r bits in the z bits and r logical channel types meet a bit mapping relationship, and each bit in the z bits has a second value or a third value; when a $j^{th}$ bit in the z bits is the second value, a native data type or a logical channel type corresponding to the $j^{th}$ bit is selected; or when a $j^{th}$ bit in the z bits is the third value, a native data type or a logical channel type corresponding to the $j^{th}$ bit is not selected; and if w bits in the z bits are the second value, there are w buffer status fields, and the w buffer status fields respectively indicate data amounts of to-be-sent data of native data types and/or logical channel types corresponding to the w bits, where z=k+r, $1\leq j\leq z$, $1\leq w\leq z$, and z, k, r, j, and w are all positive integers.

Optionally, in an embodiment, if there is one buffer status field, the second-type buffer status report further includes one compression information field, and when the x bits are the first value in the y values, the compression information field carries compression information of the to-be-sent data of the native data type or the logical channel type corresponding to the first value; or if there are w buffer status fields, the second-type buffer status report further includes w compression information fields, and the w compression information fields respectively carry compression information of the to-be-sent data of the native data types or the logical channel types corresponding to the w bits.

Optionally, the communication apparatus 1000 may correspond to the network device in embodiments of this application.

In this case, units of the communication apparatus 1000 are configured to implement the following functions.

The receiving unit 1200 is configured to:

receive a buffer status report from a terminal device, where the buffer status report indicates a data amount of to-be-sent uplink data of the terminal device; and

receive compression information of the to-be-sent uplink data from the terminal device, where the compression information indicates a compression parameter related to physical layer processing of the to-be-sent uplink data; and physical layer processing includes performing first coding on a transport block TB, and first coding is a coding mode in which compression and channel coding are separated; or physical layer processing includes separately performing second coding on a plurality of sub-TBs obtained based on a TB, and second coding is a coding mode in which compression and channel coding are combined.

The sending unit 1300 is configured to send resource scheduling information to the terminal device, where the resource scheduling information indicates an air interface resource allocated by the communication apparatus to the to-be-sent uplink data, and the air interface resource is determined based on the data amount of the to-be-sent uplink data and the compression parameter.

Optionally, in an embodiment, the sending unit 1300 is further configured to:
receive first uplink data from the terminal device on the air interface resource, where the first uplink data is obtained by performing first coding on a first transport block TB at a physical layer of the terminal device, or the first uplink data is obtained by separately performing, at the physical layer of the terminal device, second coding on a plurality of sub-TBs obtained based on the first TB, and the first TB is obtained by performing data packet assembly on the to-be-sent uplink data based on the compression parameter.

Optionally, in an embodiment, the compression parameter is a compression ratio, and the compression ratio is a ratio of an estimated length obtained by compressing the to-be-sent uplink data to a length of the to-be-sent uplink data that is not compressed; or
the compression parameter is an estimated length obtained by compressing the to-be-sent uplink data.

Optionally, in an embodiment, the resource scheduling information includes resource indication information and modulation and coding scheme MCS information.

Optionally, in an embodiment, the to-be-sent uplink data is physical layer native data, the buffer status report is a first-type buffer status report, and the first-type buffer status report indicates a data amount of the to-be-sent native data; and

the first-type buffer status report includes a logical channel group identifier LCG ID field and a buffer status field, the LCG ID field has a plurality of different values, and the plurality of different values respectively correspond to different native data types.

Optionally, in an embodiment, the first-type buffer status report includes a compression information field, and the compression information field carries compression information of the to-be-sent data of the native data type corresponding to the LCG ID field.

Optionally, in an embodiment, the to-be-sent uplink data is physical layer native data, the buffer status report is a second-type buffer status report, and the second-type buffer status report indicates a data amount of the to-be-sent native data;

the second-type buffer status report is obtained by extending a short buffer status report or a long buffer status report at a media access control MAC layer, and the second-type buffer status report includes a logical channel group identifier LCG ID field and a buffer status field; and

the LCG ID field includes x bits, there is one buffer status field, the x bits have y different values, p values in the y values respectively correspond to different native data types, q values in the y values respectively correspond to different logical channel types, and when the LCG ID field is a first value in the y values, the buffer status field indicates a data amount of to-be-sent data of a native data type or a logical channel type corresponding to the first value, where $p+q \leq y$, $y = 2^x$, and x, y, p, and q are all integers; or the LCG ID field includes z bits, k bits in the z bits and k native data types meet a bit mapping relationship, r bits in the z bits and r logical channel types meet a bit mapping relationship, and each bit in the z bits has a second value or a third value; when a $j^{th}$ bit in the z bits is the second value, a native data type or a logical channel type corresponding to the $j^{th}$ bit is selected; or when a $j^{th}$ bit in the z bits is the third value, a native data type or a logical channel type corresponding to the $j^{th}$ bit is not selected; and if w bits in the z bits are the second value, there are w buffer status fields, and the w buffer status fields respectively indicate data amounts of to-be-sent data of native data types and/or logical channel types corresponding to the w bits, where $z=k+r$, $1 \leq j \leq z$, $1 \leq w \leq z$, and z, k, r, j, and w are all positive integers.

Optionally, in an embodiment, if there is one buffer status field, the second-type buffer status report further includes one compression information field, and when the x bits are the first value in the y values, the compression information field carries compression information of the to-be-sent data of the native data type or the logical channel type corresponding to the first value; or if there are w buffer status fields, the second-type buffer status report further includes w compression information fields, and the w compression information fields respectively carry compression information of the to-be-sent data of the native data types or the logical channel types corresponding to the w bits.

In the foregoing implementations, the receiving unit 1200 and the sending unit 1300 may alternatively be integrated into one transceiver unit or one input/output unit that has both a receiving function and a sending function. This is not limited herein.

In embodiments in which the communication apparatus 1000 corresponds to the terminal device, the processing unit 1100 is configured to perform processing and/or an operation, other than sending and receiving actions, implemented inside the terminal device, the receiving unit 1200 is configured to perform a receiving action performed by the terminal device, and the sending unit 1300 is configured to perform a sending action performed by the terminal device.

For example, in FIG. 6, the sending unit 1300 performs the sending actions in step 610 and step 620, and the receiving unit 1200 performs the receiving action in step 630. In addition, the processing unit 1100 performs the following processing in method embodiments: determining a packet assembly length based on the resource indication and the MCS indication; performing packet assembly based on the packet assembly length and the compression information, to obtain the first TB; and the like.

In embodiments in which the communication apparatus 1000 corresponds to the network device, the processing unit 1100 is configured to perform processing and/or an operation, other than sending and receiving actions, implemented inside the network device, the receiving unit 1200 is configured to perform a receiving action performed by the network device, and the sending unit 1300 is configured to perform a sending action performed by the network device.

For example, in FIG. 6, the receiving unit 1200 performs receiving actions in step 610 and step 620. Optionally, the receiving unit 1200 performs a receiving action in step 640. The sending unit 1300 performs a sending action in step 630. In addition, the processing unit 1100 performs the following processing in method embodiments: determining a to-be-scheduled air interface resource based on the data amount of the to-be-sent uplink data of the terminal device and the compression information that are in the received buffer status report; and the like.

FIG. 12 is a diagram of a structure of a communication apparatus according to this application. As shown in FIG. 12, the communication apparatus 10 includes one or more processors 11, one or more memories 12, and one or more communication interfaces 13. The processor 11 is configured to control the communication interface 13 to receive and send a signal, the memory 12 is configured to store a computer program, and the processor 11 is configured to: invoke the computer program from the memory 12, and run the computer program, to enable the communication apparatus 10 to perform processing performed by the terminal device or the network device in the method embodiments of this application.

For example, the processor 11 may have a function of the processing unit 1100 shown in FIG. 11, and the communication interface 13 may have a function of the receiving unit 1200 and/or the sending unit 1300. Specifically, the processor 11 may be configured to perform processing or an operation performed inside the communication apparatus, and the communication interface 13 is configured to perform a sending and/or receiving operation performed by the communication apparatus.

In an implementation, the communication apparatus 10 may be the terminal device in the method embodiments. In this implementation, the communication interface 13 may be a transceiver of the terminal device. The transceiver may include a receiver and/or a transmitter. Optionally, the processor 11 may be a baseband apparatus of the terminal device, and the communication interface 13 may be a radio frequency apparatus.

In another implementation, the communication apparatus 10 may be a chip (or a chip system) installed in the terminal device. In this implementation, the communication interface 13 may be an interface circuit or an input/output interface.

In an implementation, the communication apparatus 10 may be the network device in the method embodiments. In this implementation, the communication interface 13 may be a transceiver of the network device. The transceiver may include a receiver and/or a transmitter. Optionally, the processor 11 may be a baseband apparatus of the network device, and the communication interface 13 may be a radio frequency apparatus.

In another implementation, the communication apparatus 10 may be a chip (or a chip system) installed in the network device. In this implementation, the communication interface 13 may be an interface circuit or an input/output interface.

In FIG. 12, a dashed box behind a component (for example, the processor, the memory, or the communication interface) indicates that there may be more than one component.

Optionally, the memory and the processor in the foregoing apparatus embodiments may be physically independent units, or the memory and the processor may be integrated together. This is not limited in this specification.

In addition, this application further provides a computer-readable storage medium. The computer-readable storage medium stores computer instructions. When the computer instructions are run on a computer, an operation and/or processing performed by the terminal device in the method embodiments of this application are/is performed.

This application further provides a computer-readable storage medium. The computer-readable storage medium stores computer instructions. When the computer instructions are run on a computer, an operation and/or processing performed by the network device in the method embodiments of this application are/is performed.

In addition, this application further provides a computer program product. The computer program product includes computer program code or instructions. When the computer program code or the instructions are run on a computer, an operation and/or processing performed by the terminal device in the method embodiments of this application are/is performed.

This application further provides a computer program product. The computer program product includes computer program code or instructions. When the computer program code or the instructions are run on a computer, an operation and/or processing performed by the network device in the method embodiments of this application are/is performed.

In addition, this application further provides a chip. The chip includes a processor. A memory configured to store a computer program is disposed independent of the chip. The processor is configured to execute the computer program stored in the memory, to enable an apparatus in which the chip is installed to perform an operation and/or processing performed by the terminal device in any one of the foregoing method embodiments.

Further, the chip may include a communication interface. The communication interface may be an input/output interface, an interface circuit, or the like. Further, the chip may include the memory.

This application further provides a chip. The chip includes a processor. A memory configured to store a computer program is disposed independent of the chip. The processor is configured to execute the computer program stored in the memory, to enable an apparatus in which the chip is installed to perform an operation and/or processing performed by the network device in any one of the foregoing method embodiments.

Further, the chip may include a communication interface. The communication interface may be an input/output interface, an interface circuit, or the like. Further, the chip may include the memory.

Optionally, there may be one or more processors, there may be one or more memories, and there may be one or more memories.

In addition, this application further provides a communication apparatus (for example, may be a chip or a chip system), including a processor and a communication interface. Based on an operation and/or processing performed by the terminal device in any one of the foregoing method embodiments, the communication interface is configured to receive to-be-processed data and/or information, and the processor processes the data and/or information. Optionally, the communication interface is further configured to send (or referred to as output) data and/or information processed by the processor.

This application further provides a communication apparatus (for example, may be a chip or a chip system), including a processor and a communication interface. Based on an operation and/or processing performed by the network device in any one of the foregoing method embodiments, the communication interface is configured to receive to-be-processed data and/or information, the processor processes the data and/or information, and the communication interface is configured to send (or referred to as output) data and/or information processed by the processor.

In addition, this application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the terminal device in any one of the foregoing method embodiments.

This application further provides a communication apparatus, including at least one processor. The at least one processor is coupled to at least one memory. The at least one processor is configured to execute a computer program or instructions stored in the at least one memory, to enable the communication apparatus to perform an operation and/or processing performed by the network device in any one of the foregoing method embodiments.

In addition, this application further provides a wireless communication system, including the terminal device and the network device in method embodiments of this application.

It should be noted that the term "and/or" describes an association relationship for describing associated objects and represents that three relationships may exist. For example, A and/or B may represent the following three cases: Only A exists, both A and B exist, and only B exists. A quantity of A is not limited, and may be one or more than one. A quantity of B is not limited, and may be one or more than one.

In addition, in the foregoing embodiments, terms such as "first" and "second" are merely intended to distinguish between different objects, and should not constitute any limitation on this application. For example, different buffer status reports, different values, and the like are distinguished. In addition, it should be understood that "first" and "second" do not mean that described objects are definitely different. For example, the first value and the second value are merely for describing two values, and the first value and the second value may be the same or may be different. This is not limited.

The processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A resource scheduling method, comprising:

sending, by a terminal device, a buffer status report to a network device, wherein the buffer status report indicates a data amount of to-be-sent uplink data of the terminal device;
sending, by the terminal device, compression information of the to-be-sent uplink data to the network device, wherein the compression information indicates a compression parameter related to physical layer processing of the to-be-sent uplink data; and physical layer processing comprises performing first coding on a transport block TB, and first coding is a coding mode in which compression and channel coding are separated; or physical layer processing comprises separately performing second coding on a plurality of sub-TBs obtained based on a TB, and second coding is a coding mode in which compression and channel coding are combined; and
receiving, by the terminal device, resource scheduling information from the network device, wherein the resource scheduling information indicates an air interface resource allocated by the network device to the to-be-sent uplink data, and the air interface resource is determined based on the data amount of the to-be-sent uplink data and the compression parameter.

2. The method according to claim 1, wherein the method further comprises:
sending, by the terminal device, first uplink data on the air interface resource, wherein the first uplink data is obtained by performing first coding on a first transport block TB at a physical layer of the terminal device, or the first uplink data is obtained by separately performing, at the physical layer of the terminal device, second coding on a plurality of sub-TBs obtained based on a first TB, and the first TB is obtained by performing data packet assembly on the to-be-sent uplink data based on the compression parameter.

3. The method according to claim 1 or 2, wherein the compression parameter is a compression ratio, and the compression ratio is a ratio of an estimated length obtained by compressing the to-be-sent uplink data to a length of the to-be-sent uplink data that is not compressed; or
the compression parameter is an estimated length obtained by compressing the to-be-sent uplink data.

4. The method according to claim 2 or 3, wherein the resource scheduling information comprises resource indication information and modulation and coding scheme MCS information, and the method further comprises:

determining, by the terminal device, a packet assembly length based on the resource indication information and the MCS information;

performing, by the terminal device, data packet assembly on the to-be-sent uplink data based on the packet assembly length and the compression parameter, to obtain the first TB, wherein the estimated length that is obtained by compressing the to-be-sent uplink data and that is comprised in the first TB is less than or equal to the packet assembly length; and

performing, by the terminal device, physical layer processing on the first TB to obtain the first uplink data.

5. The method according to any one of claims 1 to 4, wherein the to-be-sent uplink data is physical layer native data, the buffer status report is a first-type buffer status report, and the first-type buffer status report indicates a data amount of the to-be-sent native data; and

the first-type buffer status report comprises a logical channel group identifier LCG ID field and a buffer status field, the LCG ID field has a plurality of different values, the plurality of different values respectively correspond to different native data types, and the buffer status field indicates a data amount of to-be-sent data of a native data type corresponding to the LCG ID field.

6. The method according to claim 5, wherein the first-type buffer status report comprises a compression information field, and the compression information field carries compression information of the to-be-sent data of the native data type corresponding to the LCG ID field.

7. The method according to any one of claims 1 to 4, wherein the to-be-sent uplink data is physical layer native data, the buffer status report is a second-type buffer status report, and the second-type buffer status report indicates a data amount of the to-be-sent native data;

the second-type buffer status report is obtained by extending a short buffer status report or a long buffer status report at a media access control MAC layer, and the second-type buffer status report comprises a logical channel group identifier LCG ID field and a buffer status field; and the LCG ID field comprises x bits, there is one buffer status field, the x bits have y different values, p values in the y values respectively correspond to different native data types, q values in the y different values respectively correspond to different logical channel types, and when the LCG ID field is a first value in the y values, the buffer status field indicates a data amount of to-be-sent data of a native data type or a logical channel type corresponding to the first value, wherein p+q≤y, y = 2$^x$, and x, y, p, and q are all integers; or

the LCG ID field comprises z bits, k bits in the z bits and k native data types meet a bit mapping relationship, r bits in the z bits and r logical channel types meet a bit mapping relationship, and each bit in the z bits has a second value or a third value; when a j$^{th}$ bit in the z bits is the second value, a native data type or a logical channel type corresponding to the j$^{th}$ bit is selected; or when a j$^{th}$ bit in the z bits is the third value, a native data type or a logical channel type corresponding to the j$^{th}$ bit is not selected; and if w bits in the z bits are the second value, there are w buffer status fields, and the w buffer status fields respectively indicate data amounts of to-be-sent data of native data types and/or logical channel types corresponding to the w bits, wherein z=k+r, 1≤j≤z, 1≤w≤z, and z, k, r, j, and w are all positive integers.

8. The method according to claim 7, wherein if there is one buffer status field, the second-type buffer status report further comprises one compression information field, and when the x bits are the first value in the y values, the compression information field carries compression information of the to-be-sent data of the native data type or the logical channel type corresponding to the first value; or

if there are w buffer status fields, the second-type buffer status report further comprises w compression information fields, and the w compression information fields respectively carry compression information of the to-be-sent data of the native data types or the logical channel types corresponding to the w bits.

9. A resource scheduling method, comprising:

receiving, by a network device, a buffer status report from a terminal device, wherein the buffer status report indicates a data amount of to-be-sent uplink data of the terminal device;

receiving, by the network device, compression information of the to-be-sent uplink data from the terminal device, wherein the compression information indicates a compression parameter related to physical layer processing of the to-be-sent uplink data; and physical layer processing comprises performing first coding on a transport block TB, and first coding is a coding mode in which compression and channel coding are separated; or physical layer processing comprises separately performing second coding on a plurality of sub-TBs obtained based on a TB, and second coding is a coding mode in which compression and channel coding are combined; and sending, by the network device, resource scheduling information to the terminal device, wherein the resource scheduling information indicates an air interface resource allocated by the network device to the to-be-sent uplink data, and the air interface resource is determined based on the data amount of the to-be-sent uplink data and the compression parameter.

10. The method according to claim 9, wherein the method further comprises:
receiving, by the network device, first uplink data from the terminal device on the air interface resource, wherein the first uplink data is obtained by performing first coding on a first transport block TB at a physical layer of the terminal device, or the first uplink data is obtained by separately performing, at the physical layer of the terminal device, second coding on a plurality of sub-TBs obtained based on the first TB, and the first TB is obtained by performing data packet assembly on the to-be-sent uplink data based on the compression parameter.

11. The method according to claim 9 or 10, wherein the compression parameter is a compression ratio, and the compression ratio is a ratio of an estimated length obtained by compressing the to-be-sent uplink data to a length of the to-be-sent uplink data that is not compressed; or
the compression parameter is an estimated length obtained by compressing the to-be-sent uplink data.

12. The method according to any one of claims 9 to 11, wherein the resource scheduling information comprises resource indication information and modulation and coding scheme MCS information.

13. The method according to any one of claims 9 to 11, wherein the to-be-sent uplink data is physical layer native data, the buffer status report is a first-type buffer status report, and the first-type buffer status report indicates a data amount of the to-be-sent native data; and
the first-type buffer status report comprises a logical channel group identifier LCG ID field and a buffer status field, the LCG ID field has a plurality of different values, the plurality of different values respectively correspond to different native data types, and the buffer status field indicates a data amount of to-be-sent data of a native data type corresponding to the LCG ID field.

14. The method according to claim 13, wherein the first-type buffer status report comprises a compression information field, and the compression information field carries compression information of the to-be-sent data of the native data type corresponding to the LCG ID field.

15. The method according to any one of claims 9 to 11, wherein the to-be-sent uplink data is physical layer native data, the buffer status report is a second-type buffer status report, and the second-type buffer status report indicates a data amount of the to-be-sent native data;

the second-type buffer status report is obtained by extending a short buffer status report or a long buffer status report at a media access control MAC layer, and the second-type buffer status report comprises a logical channel group identifier LCG ID field and a buffer status field; and
the LCG ID field comprises x bits, there is one buffer status field, the x bits have y different values, p values in the y values respectively correspond to different native data types, q values in the y values respectively correspond to different logical channel types, and when the LCG ID field is a first value in the y values, the buffer status field indicates a data amount of to-be-sent data of a native data type or a logical channel type corresponding to the first value, wherein $p+q\leq y$, $y = 2^x$, and x, y, p, and q are all integers; or
the LCG ID field comprises z bits, k bits in the z bits and k native data types meet a bit mapping relationship, r bits in the z bits and r logical channel types meet a bit mapping relationship, and each bit in the z bits has a second value or a third value; when a $j^{th}$ bit in the z bits is the second value, a native data type or a logical channel type corresponding to the $j^{th}$ bit is selected; or when a $j^{th}$ bit in the z bits is the third value, a native data type or a logical channel type corresponding to the $j^{th}$ bit is not selected; and if w bits in the z bits are the second value, there are w buffer status fields, and the w buffer status fields respectively indicate data amounts of to-be-sent data of native data types and/or logical channel types corresponding to the w bits, wherein $z=k+r$, $1\leq j\leq z$, $1\leq w\leq z$, and z, k, r, j, and w are all positive integers.

16. The method according to claim 15, wherein if there is one buffer status field, the second-type buffer status report further comprises one compression information field, and when the x bits are the first value in the y values, the compression information field carries compression information of the to-be-sent data of the native data type or the logical channel type corresponding to the first value; or
if there are w buffer status fields, the second-type buffer status report further comprises w compression information fields, and the w compression information fields respectively carry compression information of the to-be-sent data of the native data types or the logical channel types corresponding to the w bits.

17. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 8 or the method according to any one of claims 9 to 16.

18. A chip, comprising a processor and a communication interface, wherein the communication interface is configured to: receive data and/or information, and transmit the received data and/or information to the processor; and the processor processes the data and/or information, to perform the method according to any one of claims 1 to 8 or the method according to any one of claims 9 to 16.

19. A computer-readable storage medium, wherein the computer-readable storage medium stores computer instructions, and when the computer instructions are run on a computer, the method according to any one of claims 1 to 8 is enabled, or the method according to any one of claims 9 to 16 is implemented.

20. A computer program product, wherein the computer program product comprises computer program code, and when the computer program code is run on a computer, the method according to any one of claims 1 to 8 or the method according to any one of claims 9 to 16 is implemented.

FIG. 1

FIG. 2

TB                                    CRC

L

Compression                    CRC/Padding

L'

Resource
indication and
MCS indication

Channel
coding

Coded block

FIG. 3

CC
Data amount in a buffer (channel coding only)                    Scheduled
resource size

Compression+CC/
JSCC

Data amount in a buffer

Scheduled
resource size

FIG. 4

110

FIG. 5

| Terminal device | | Network device |
| --- | --- | --- |

610: Buffer status report
(indicating a data amount of to-be-sent
uplink data)

620: Compression information of the
to-be-sent uplink data
(the compression information
indicates a compression parameter
related to physical layer processing
of the to-be-sent data)

630: Resource scheduling
information

640: Physical uplink
shared channel

FIG. 6

TB

Data in a buffer of a logical channel (group)

| L bits |
|---|

⇩

| PB 1 | PB 2 | ... | PB (K–1) | PB K |
|---|---|---|---|---|

$N_s$ bits

FIG. 7

Short BSR

| LCG ID (3 bits) | Buffer status (5 bits) |
|---|---|
| CR (8 bits) | |

Long BSR

| LCG 1 | LCG 2 | LCG 3 | LCG 4 | LCG 5 | LCG 6 | LCG 7 | LCG 8 |
|---|---|---|---|---|---|---|---|
| Buffer status 1 (8 bits) | | | | | | | |
| Buffer status 2 (8 bits) | | | | | | | |
| ... | | | | | | | |
| Buffer status n (8 bits) | | | | | | | |
| CR 1 (8 bits) | | | | | | | |
| CR 2 (8 bits) | | | | | | | |
| ... | | | | | | | |
| CR n (8 bits) | | | | | | | |

FIG. 8

Second-type BSR:

Extended short BSR

| LCG ID (4 bits) | Buffer status (6 bits) | CR (6 bits) |
|---|---|---|

(a)

Extended long BSR

| LCG 1 | LCG 2 | LCG 3 | LCG 4 | LCG 5 | LCG 6 | LCG 7 | LCG 8 | LCG 9 | LCG 10 | LCG 11 | LCG 12 | LCG 13 | LCG 14 | LCG 15 | LCG 16 |
|---|---|---|---|---|---|---|---|---|---|---|---|---|---|---|---|
| Buffer status 1 (8 bits) | | | | | | | | CR 1 (8 bits) | | | | | | | |
| Buffer status 2 (8 bits) | | | | | | | | CR 2 (8 bits) | | | | | | | |
| ... | | | | | | | | | | | | | | | |
| Buffer status w (8 bits) | | | | | | | | CR w (8 bits) | | | | | | | |

(b)

FIG. 9

FIG. 10

$S_1+S_2+S_3+S_4<T$

Communication
apparatus 1000

Processing unit 1100

Receiving unit 1200

Sending unit 1300

FIG. 11

Communication
apparatus 10

Processor
11

Memory
12

Communication
interface
13

FIG. 12

| INTERNATIONAL SEARCH REPORT | International application No. |
|---|---|
| | **PCT/CN2022/104584** |

**A. CLASSIFICATION OF SUBJECT MATTER**

H04W28/02(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; ENTXTC; USTXT; EPTXT; WOTXT: 缓冲区状态报告, 缓存状态报告, 缓冲器状态报告, 压缩比, 压缩率, 压缩因子, 压缩增益, 编码, 资源, 调度, 分配, 信源, 信道, 独立, 分离, 联合, 编码, BSR, compression, coding, resource, scheduling, allocation, source, channel, independence, separation, union, coding, SSCC, JSCC

**C. DOCUMENTS CONSIDERED TO BE RELEVANT**

| Category* | Citation of document, with indication, where appropriate, of the relevant passages | Relevant to claim No. |
|---|---|---|
| Y | CN 111711967 A (QUALCOMM INC.) 25 September 2020 (2020-09-25) description, paragraphs [0283]-[0466] | 1-20 |
| Y | CN 113472480 A (VIVO COMMUNICATION TECHNOLOGY CO., LTD.) 01 October 2021 (2021-10-01) description, paragraphs [0052]-[0063] | 1-20 |
| Y | US 2009296637 A1 (FISCHER PATRICK) 03 December 2009 (2009-12-03) description, paragraphs [0052]-[0063] | 1-20 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 March 2023** | **03 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

| International application No. |
| PCT/CN2022/104584 |

| Patent document cited in search report | | | Publication date (day/month/year) | Patent family member(s) | | | Publication date (day/month/year) |
|---|---|---|---|---|---|---|---|
| CN | 111711967 | A | 25 September 2020 | JP | 2017539153 | A | 28 December 2017 |
| | | | | WO | 2016077314 | A1 | 19 May 2016 |
| | | | | US | 2016142934 | A1 | 19 May 2016 |
| | | | | US | 10412619 | B2 | 10 September 2019 |
| | | | | JP | 2020145710 | A | 10 September 2020 |
| | | | | EP | 3585122 | A1 | 25 December 2019 |
| | | | | KR | 20170083548 | A | 18 July 2017 |
| | | | | US | 2020059819 | A1 | 20 February 2020 |
| | | | | US | 10805828 | B2 | 13 October 2020 |
| | | | | EP | 3219163 | A1 | 20 September 2017 |
| | | | | EP | 3219163 | B1 | 07 August 2019 |
| CN | 113472480 | A | 01 October 2021 | None | | | |
| US | 2009296637 | A1 | 03 December 2009 | TW | 200926851 | A | 16 June 2009 |
| | | | | TWI | 377818 | B | 21 November 2012 |
| | | | | TW | 201223301 | A | 01 June 2012 |
| | | | | TWI | 448171 | B | 01 August 2014 |
| | | | | DE | 602008000672 | D1 | 01 April 2010 |
| | | | | JP | 2010524329 | A | 15 July 2010 |
| | | | | JP | 4863530 | B2 | 25 January 2012 |
| | | | | EP | 2028890 | A1 | 25 February 2009 |
| | | | | EP | 2028890 | B1 | 02 January 2019 |
| | | | | US | 2009052420 | A1 | 26 February 2009 |
| | | | | US | 7792130 | B2 | 07 September 2010 |
| | | | | US | 2016192253 | A1 | 30 June 2016 |
| | | | | US | 10440609 | B2 | 08 October 2019 |
| | | | | US | 2021337429 | A1 | 28 October 2021 |
| | | | | US | 2009061878 | A1 | 05 March 2009 |
| | | | | US | 9319935 | B2 | 19 April 2016 |
| | | | | WO | 2009022796 | A2 | 19 February 2009 |
| | | | | WO | 2009022796 | A3 | 16 April 2009 |
| | | | | JP | 2011511480 | A | 07 April 2011 |
| | | | | JP | 5063781 | B2 | 31 October 2012 |
| | | | | WO | 2009022795 | A2 | 19 February 2009 |
| | | | | WO | 2009022795 | A3 | 09 April 2009 |
| | | | | JP | 2012095305 | A | 17 May 2012 |
| | | | | JP | 5142417 | B2 | 13 February 2013 |
| | | | | DE | 602008000062 | D1 | 10 September 2009 |
| | | | | US | 2016366611 | A1 | 15 December 2016 |
| | | | | US | 9992716 | B2 | 05 June 2018 |
| | | | | EP | 2091281 | A1 | 19 August 2009 |
| | | | | EP | 2091281 | B1 | 17 February 2010 |
| | | | | EP | 2026617 | A1 | 18 February 2009 |
| | | | | EP | 2026617 | B1 | 29 July 2009 |
| | | | | US | 8681694 | B2 | 25 March 2014 |
| | | | | US | 2019394677 | A1 | 26 December 2019 |
| | | | | US | 11089509 | B2 | 10 August 2021 |
| | | | | US | 2015043514 | A1 | 12 February 2015 |
| | | | | US | 9549353 | B2 | 17 January 2017 |
| | | | | US | 2011299476 | A1 | 08 December 2011 |
| | | | | US | 8913608 | B2 | 16 December 2014 |

Form PCT/ISA/210 (patent family annex) (July 2022)

INTERNATIONAL SEARCH REPORT
Information on patent family members

International application No.

**PCT/CN2022/104584**

| Patent document cited in search report | Publication date (day/month/year) | Patent family member(s) | | Publication date (day/month/year) |
|---|---|---|---|---|
| | | TW 200913748 | A | 16 March 2009 |
| | | TWI 363571 | B | 01 May 2012 |

Form PCT/ISA/210 (patent family annex) (July 2022)